# EUROPEAN PATENT SPECIFICATION

(11) **EP 2 983 889 B1**
(45) Date of publication and mention of the grant of the patent: **15.11.2017**
(21) Application number: 14728272.7
(22) Date of filing: 10.04.2014
(51) Int. Cl.: B29C 49/64, B29C 49/18, B29C 49/06, B29K 67/00, B29C 49/02, B29C 49/48

(54) **A PROCESS AND APPARATUS FOR THE MAKING OF LARGE SIZED CONTAINERS OBTAINED FROM A PREFORM**
VERFAHREN UND VORRICHTUNG ZUR HERSTELLUNG VON GROSSFORMATIGEN BEHÄLTERN AUS EINER VORFORM
PROCÉDÉ ET APPAREIL DE FABRICATION DE CONTENANTS DE GRANDES DIMENSIONS OBTENUS À PARTIR D'UNE PRÉFORME

(30) Priority: 10.04.2013 IT RM20130218
(43) Date of publication of application: 17.02.2016
(73) Proprietor: Siapi S.r.l. A Socio Unico, 31020 San Vendemiano (TV) (IT)
(72) Inventor: COMPER, Lucia, I-31020 San Vendemiano (TV) (IT)
(74) Representative: Cardelli, Guido
(86) International application number: PCT/IB2014/000525
(87) International publication number: WO 2014/167408

(56) References cited:
- EP-A1- 2 517 862
- EP-A2- 0 713 758
- DATABASE WPI Week 198429 Thomson Scientific, London, GB; AN 1984-178756 XP002716101, -& JP S59 2818 A (AOKI K) 9 January 1984 (1984-01-09)
- DATABASE WPI Week 199215 Thomson Scientific, London, GB; AN 1992-119355 XP002716102, -& JP H04 62027 A (DAINIPPON PRINTING CO LTD) 27 February 1992 (1992-02-27)

## Description

### Field of the invention

The present invention relates to an apparatus for forming large sized blown containers, and more specifically, to an apparatus for forming large sized blown containers from blow moulding of a preform. The present invention further relates to a process for the blow moulding of such large sized containers, the process being implemented by the above mentioned apparatus.

### Prior Art

EP2517862 and JPS592818 disclose processes and an apparatuses in accordance with the preambles of claims 1 and 4. Up to now, the use of large sized returnable containers (for example, about 20 litres) is widely known. They typically are used as containers for beverages (e.g., mineral water or the like). They are collected from the market, filled up, and reused. To do this, it is necessary to firstly wash the used container with hot aqueous alkaline solutions or the like, the washing being carried on at a temperature typically from 55 to 70 °C, and then filling the container with the beverage.

In the past, such large sized containers were produced from an extrusion process with PC (polycarbonate), and then blown in moulds. A container of this type is described in document JP-A-8-164557.

In recent years, it has become necessary to change the container material due to BPA leaching problems from the PC, BPA being a substance that is part of the list of carcinogens. Further, to this inconvenient there is also a functionality inconvenient. More specifically, the polycarbonate has high transparency, heat resistance, impact resistance, and high quality, but it is expensive. So, to produce a large sized reusable container has been proposed the use of an inexpensive polyester resin, such as polyethylene terephthalate (PET). A container thus produced it is described in the patent document JP-A- 11-34152.

In this document JP-A- 11-34152 there is provided a process and a single stage type apparatus (i.e., wherein the preform it is first formed by injection moulding, then it is fed to a blow mould for the final formation thereof) to produce large sized PET containers in which the degree of crystallinity can be improved and a stress in the material that has occurred during the stretching is mitigated by treating the stretched portion of the container with a thermal treatment, for the reason, thereby improving the thermal resistance of the container. However, when a large sized container is moulded by using a polyester resin (for example, polyethylene terephthalate PET) as an alternative to polycarbonate (PC), the transparency of the walls may be satisfactory but the heat resistance is lower with respect to PC.

Moreover, from document EP2465661A1 there is disclosed a blow moulding process of PET preforms and a single-stage apparatus to implement such a process, for the making of large sized PET containers which have good transparency and good heat resistance.

According to this document, a preform for forming a large sized container has a high thickness (for example, the thickness of the preform is from 8 to 10 mm). In order to avoid defects with the transparency of the container due to the formation of spherulitic crystallization occurred in the container due to a high stretching ratio, there is provided an intermediate pre-blowing step, and a final blow moulding step where the formation of the container occurs.

According to this process, there is provided a reusable large sized container that shows good heat resistance and transparency in a balanced manner, and has a better resistance to loads, thanks to the fact of providing an apparatus which comprises a blow mould where separated heating zones are provided. The degree of crystallinity is thus improved andi the thermal resistance of the container is improved.

Nevertheless, this apparatus being a single stage apparatus and the process providing the above intermediate pre-blowing and heat treatment step, are costly in terms of time and productivity.

Therefore; aim of the present invention is to provide an apparatus for the production of large sized containers and the production process therefore which solves all the above indicated inconveniences of the state of the art, and which show an improved productivity, and reduced process time.

### Brief description of the invention

There is provided a process in accordance with claim 1 for forming a large sized container from an injection moulded preform having a big thickness, wherein a preform of injection moulded material is first conveyed into a heat treatment area to obtain determined mechanical features, and subsequently the heat treated preform it is conveyed in a pre-blowing mould where the preform is pre-formed with a small stretch ratio, and after pre- blowing the preform the same it is conveyed in a final blow mould where the forming of the large sized container it is obtained.

There is also provided a two-stage apparatus in accordance with claim 4 for the forming of a large sized container from a injection moulded preform having big thickness, wherein there is provided a heat treatment area of the preform, a pre-blowing area of the heat treated preform wherein there is provided a pre-blowing mould, and a forming area for the forming of the large sized container, wherein there is provided that the pre-blown preform it is inserted into a final blowing mould where the forming of the large sized container occurs.

According to an aspect of the present invention, a polyester resin such as polyethylene terephthalate (PET) is used as the moulding material starting from a preform having big thickness, and for forming a reusable large sized container.

According to a second aspect of the present invention, the reusable large sized container is moulded starting from a thick preform by a first heat treatment step of the preform, followed by two subsequent blowing steps, i.e. an intermediate blowing step and a final blowing step.

According to a third aspect of the present invention, when the thick preform is blown at the intermediate blowing step, the body of the preform is stretched to a proper axial and radial stretch ratio, so as to optimize the final blowing step wherein the body of the preform is stretched at a high elongation ratio. In this way, the obtained pre-blown preform at the intermediate pre-blowing step is no longer in an amorphous state but rather in a partially crystalline state but still suitable for being processed in the following step.

According to a fourth aspect of the present invention, the reusable large sized container is moulded by performing two blowing steps, that is an intermediate blowing step where stresses on the material of the preform are reduced, and a final blowing step where the preform is stretched with a high elongation ratio.

According to a fifth aspect of the present invention, the preform is heated to the optimal temperature and before the pre-blowing step, so as to improve the forming stability during the subsequent blowing steps, and in order to the transparency and the heat resistance of the final container are improved.

### Detailed description of the invention

A detailed description of two preferred embodiments of the apparatus for the forming of large sized containers according to the present invention will now be given, by way of non limiting example, and with reference to the accompanying figures, wherein:
Figures 1A to 1D schematically shows in perspective views a preform, a mould, a preform again and a container respectively, in a forming process of large sized containers according to the present invention;
Figure 2 is a partial three quarter perspective view which shows an apparatus of the present invention in an operating condition;
Figure 3 is an enlarged partial perspective view of the apparatus in Figure 2;
Figure 4 is a further enlarged partial frontal perspective view of the apparatus in Figure 2;
Figures 5 to 8 are partial perspective views showing the apparatus of the present invention with a preform in an operating sequence; and
Figure 9 is a schematic plan view illustrating a modified part of the apparatus according to a variation thereof.

With reference now to Figures from 1A to 1D, there is illustrated therein in a schematic manner operating steps of the process for the forming of large sized containers according to the present invention.

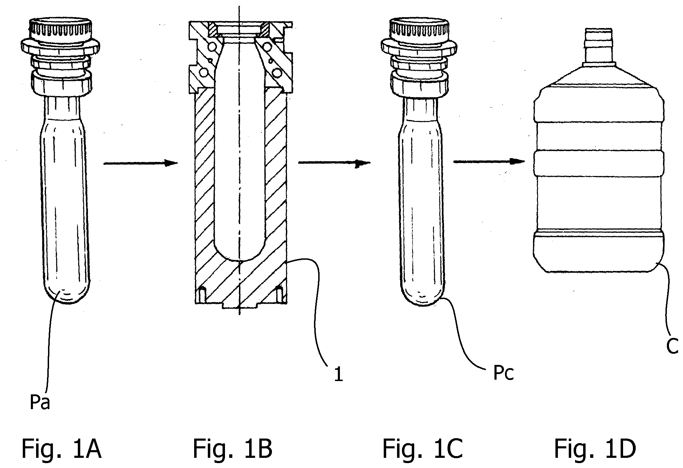

According to the present process there is provided a first heat treatment step of a preform Pa (Fig. 1A), where the preform Pa is placed in proper mechanical conditions suitable for a subsequent pre-blowing step.

Then, the so heat pre-treated preform Pa is inserted into a pre-blowing mould 1 (Fig. 1B) where a pre-blowing of the preform Pa is carried out in a condition of small elongation ratio, bringing the same to proper geometric characteristics and thermal profile which are both suitable for the final forming of a large sized container. This is an intermediate pre-blowing step between the heat treatment step of the preform Pa and the final blow moulding step.

Thus, a pre-blown preform Pc (Fig. 1C) exits the pre-blowing mould 1 in a condition of a semi-finished product having defined size and being suitable for a following blowing step of a final container C (Fig. 1D).

Here, it is necessary to point out that the process and the relevant apparatus illustrated in the figures according to the present invention is particularly dedicated (but not limited) to a two-stage apparatus for the forming of containers starting from the blow moulding of injection moulded preforms (i.e., an apparatus where it is provided that a pre-worked/preform is loaded to the apparatus, and subsequently the same is thermally pre-treated for the following processing / blowing thereof).

The present invention is particular directed to the forming of large sized containers (10 - 50 L) in PET obtained from an injection moulded preform.

Further, the present invention is particularly addressed to a blow moulding apparatuses for the making of one-way and / or refillable containers.

Additionally, the present invention is particularly addressed to an apparatus for the blow moulding of containers characterized by the application of a handle during or after the blow moulding process.

Furthermore, the present invention is particularly addressed to an apparatus for the blow moulding of containers which are suitable to be arranged in a stacked condition.

Additionally, the present invention is particularly addressed to an apparatus for the blow moulding of containers characterized by the fact of presenting a neck which is not coaxial with the container axis.

According to the present illustrative embodiment (but not limited to) there is shown a PET large sized container (up to 50 L), characterized by a neck having an inner diameter typically comprised between 30-70 mm.

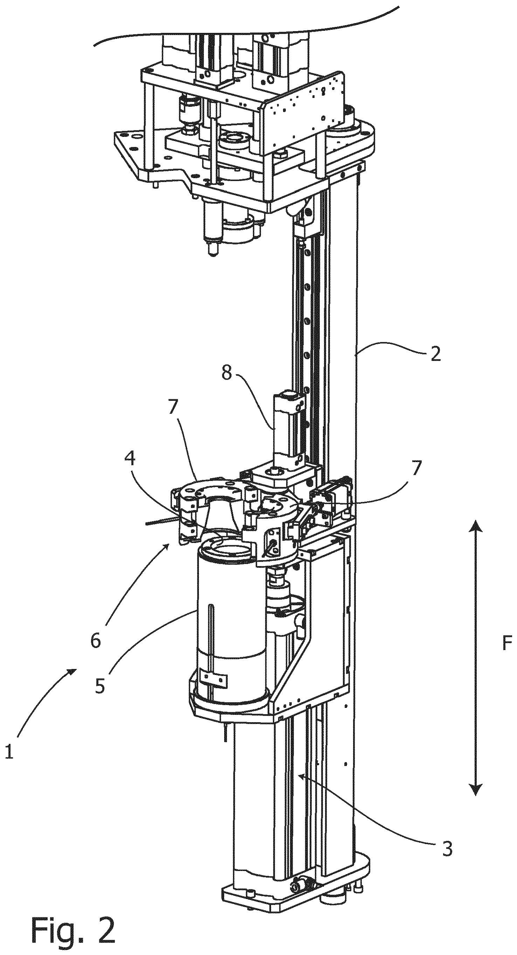

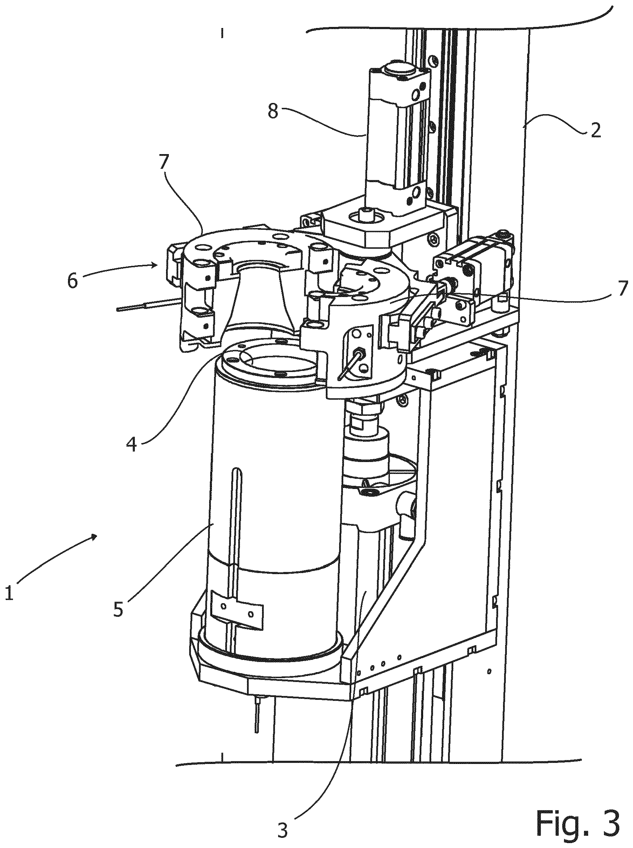

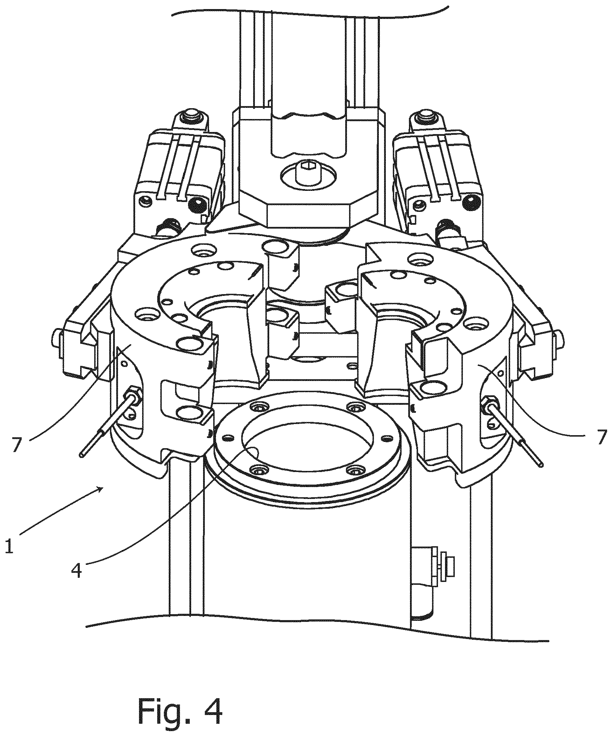

With reference now to Figures 2, 3, and 4 there is illustrated a part of the apparatus which comprises a pre-blowing mould 1 being provided for carrying on the intermediate pre-blowing step for the pre-blowing of the preform (the preform not being shown in the Figures). This pre-blowing mould 1 for the pre-blowing of the preform allows to obtain a semi-finished product having defined size and ready to be worked for the subsequent blowing step of the final container C.

The pre-blowing mould 1 is slidably mounted on a main supporting frame 2 integral with the apparatus, and is moved by actuating and handling means 3 in a manner already known in the art.

The pre-blowing mould 1 has a vertical opening 4 and allows the axial insertion of the preform Pa from the top thereof. The pre-blowing mould 1 is adapted to move along the main supporting frame 2 according to the direction of an arrow F in Figure 2 in order to allow the insertion of the preform Pa from the top thereof.

As evident in the figures, the pre-blowing mould 1 comprises a lower part 5 and an upper part 6. The upper part 6 of the pre-blowing mould 1 is divided into collars 7 that are separable one from the other and during the different steps of the pre-blowing process. The lower part 5 will be called below also main body 5 in an embodiment according to which it is in one piece. Alternatively, the lower part 5 of the pre-blowing mould 1 can be sectioned longitudinally in swinging half-moulds 9, 9 during the extraction and / or insertion of the preform (better illustrated here below).

The lower part as mould body 5 or each sector or half-mould of the lower part of the pre-blowing mould 1 according to need can be thermally regulated by means of electrical and / or thermal oil and / or other temperature control means, to obtain a semi-finished product with optimized thermal profile for the subsequent final blow moulding of the container.

It is necessary to highlight that according to the present embodiment here illustrated, the pre-blowing mould 1 comprises the vertical opening 4 and the relevant components of the accessory devices for the axial insertion of the preform Pa from the top. In an alternative embodiment of the pre-blowing mould and / or other parts of the apparatus (the parts being not shown in the figures), it may be provided the insertion of the preform from the bottom of the mould, and therefore the vertical opening will be at the lower region of the mould and the relevant components for the axial insertion of the preform from the bottom.

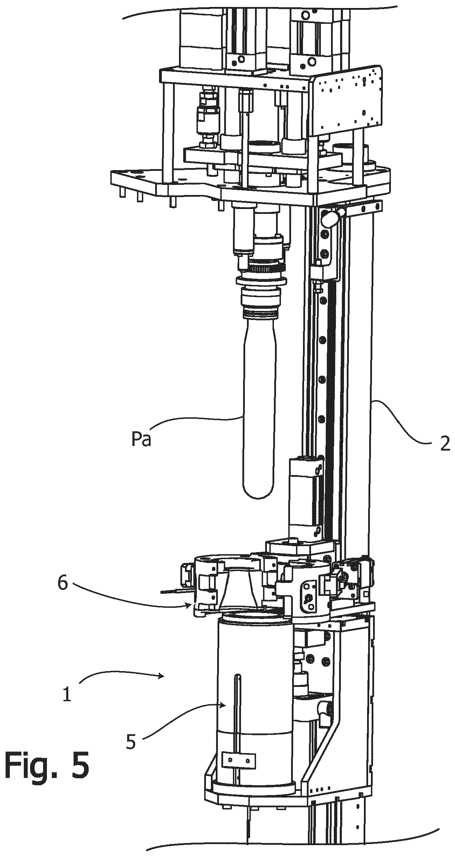

With reference now to Figures 5 to 8, there is schematically shown the operational sequence of the pre-blow moulding of the preform Pa and before the same be conveyed to the final blowing step for the formation of the large sized container C.

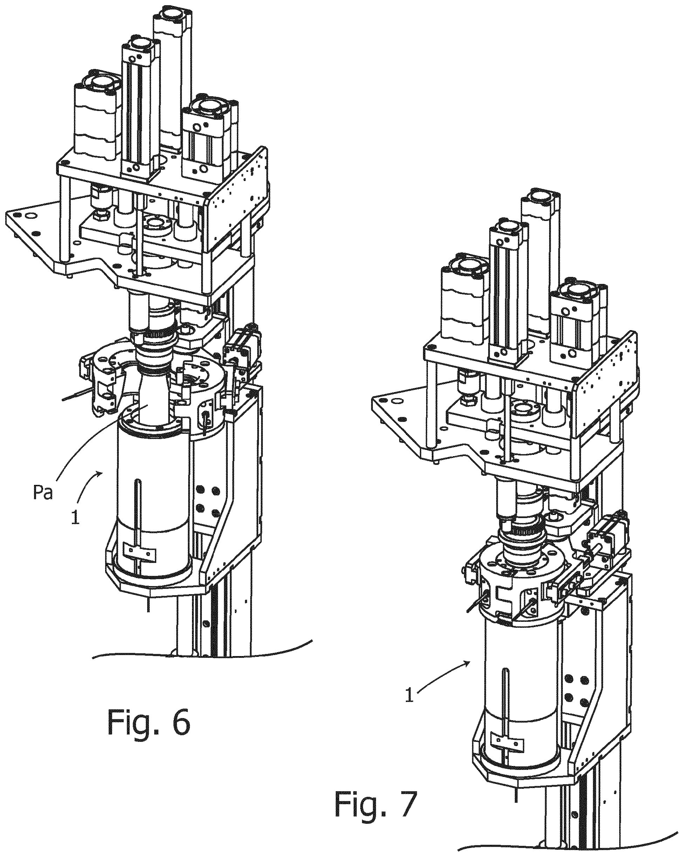

As it is sequentially illustrated in the figures, for the pre-blowing of the preform Pa it is provided that at first the pre-blowing mould 1 moves from the bottom upwards, and sliding along the supporting frame 2 until the full insertion of the preform Pa inside thereof (Fig. 5 and 6). Subsequently, a closing displacement of the collars 7 (Fig. 7) of the upper part 6 of the pre-blowing mould 1 is provided, the latter being mounted in a swinging manner about an axis thereof.

More precisely, when the body or lower part 5 of the pre-blowing mould 1 is located in the low position, the collars 7 are detached from the lower part 5 and are in the open position. Then, the pre-blowing mould 1 continues to moving vertically upward. As soon as the collars 7 touch the limit they stop, and a limit switch fixed onto the actuator related to the vertical displacement of the pre-blowing mould 1 gives the input signal for the closing of the collars 7.

The collars 7 are always kept spaced from the main body of the pre-blowing mould 1 by means of an actuator 8 that is always powered. When the former reach the upper limit at the end position, the force exerted by the actuator 3 that drives the pre-blowing mould 1 upwards is greater than the force of the actuator 8 holding the collars 7 spaced from the lower body 5 of the pre-blowing mould 1, so it starts compacting the mould body or lower part 5 and its collars 7. When the collars 7 are closed onto the pre-blowing mould 1, two stems are lowered for the latch of the collars 7.

In this condition, the pre-blowing mould 1 is closed with the preform Pa housed within. Then, begins the descent of an upper seal onto the mould, and subsequently the pre-blowing of the preform (Fig. 7).

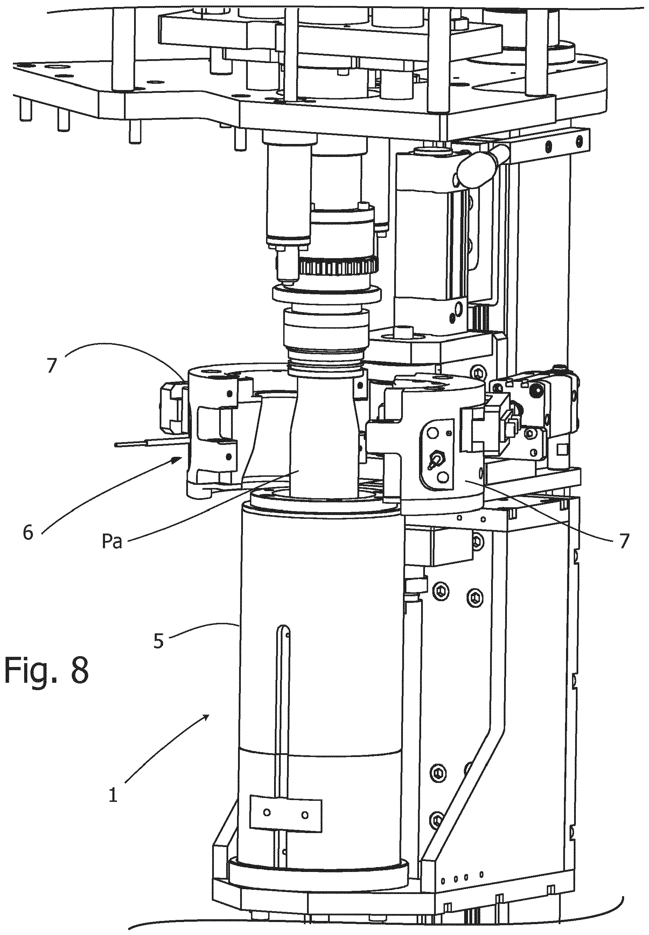

After pre-blowing step is completed, the air is discharged and safety seals are raised (Fig. 8), and begins the descent of the main body or lower part 5 downwards. In this condition, the collars 7 remain upward with respect to the main body or lower part 5 and due to the actuator, the latter always biasing against the main body or lower part 5 and the collars 7. It is necessary to point out here that the collars 7 open slightly before they reach the maximum allowable distance from the main body or lower part 5 and before continuing the displacement of the entire pre-blowing mould 1 downwardly.

At the end of this step, the preform Pa is pre-blown. Then, it is conveyed to the area of the apparatus relevant to the final blowing step and the final formation of the large sized container C.

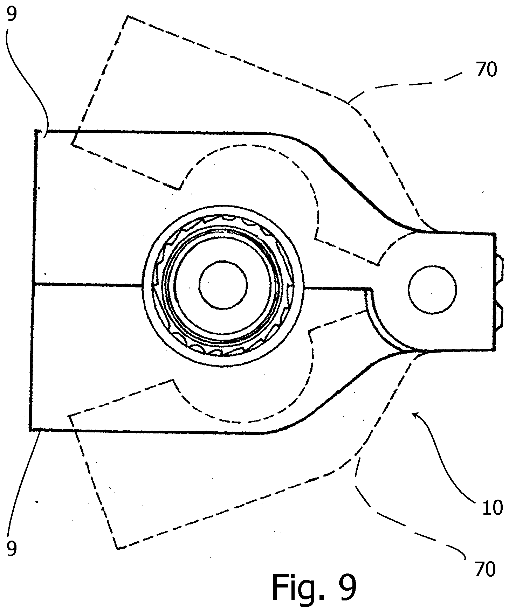

With reference now to Figure 9, it is illustrated therein in a top plan view a variation of a pre-blowing mould 10 and according to the present invention.

More precisely and according to this variation, the pre-blowing mould 10 has a lower part made of two swinging half-moulds 9, 9 and which open along the longitudinal direction thereof, which entails the relevant insertion of the preform to be blown in the radial or axial direction of the mould. The lower part of the pre-blowing mould 10 is split into two separable sectors 9, 9 during the extraction and / or insertion step of the preform from the former. The upper part of the pre-blowing mould 10 is composed of two collars 70 that are not further described.

During the opening / closing of the mould the moving of the two mould halves is defined by the process. Each half mould 9 may be thermally controlled to obtain a semi-finished product with an optimized thermal profile for the subsequent final blowing of the container.

The present invention has a number of advantages. More precisely, the process of the present invention provides for:
a) to obtain containers having improved optical performance (brilliance, transparency, isotropic features), mechanical and thermal properties;
b) to obtain container having homogeneous and / or defined distribution of the material;
c) to improve the stabilization and to reduce the shrinkage of the material for the use at high temperatures;
d) to obtain containers having a surface finish rich in small details;
e) to improve the encapsulation of handles in the container and during the blow moulding process; and
f) to improve the stability of containers when stacked one onto the other.

As a direct consequence, according to the process for the making of large sized containers of the present invention, the so pre-treated preform by a pre-blowing process as illustrated, will show a determined level of crystallinity, and in order to confer to the final large sized container high thermal and mechanical properties, and due to the fact that the resulting crystallinity from the double blow moulding process is high.

Therefore, a reusable container having high thermal properties and which allow a high temperature cleaning improving the hygiene of the container it is obtained.

## Claims

1. A process for the forming of a large sized container (C) from a preform (Pa) made of an injection moulded material and having big thickness, the process comprising an initial pre-heat treatment step for the pre-heating of said preform (Pa), and a final blow moulding step of said treated preform (Pa) for the formation of said large sized container (C), and wherein it is provided an intermediate pre-blowing step of said preform (Pa) into a pre-blowing mould (1; 10), wherein said thermally treated preform (Pa) is inserted into a pre-blowing mould (1; 10) and a pre-blowing of said preform (Pa) is carried on until to a predetermined elongation ratio condition, and wherein said preform (Pc) after said intermediate pre-blowing step has predetermined geometric characteristics and thermal profile for the subsequent final blow moulding step of said large sized container (C),
**characterized in that** said pre-blowing mould (1; 10) comprises a lower part (5) and an upper part (6), and wherein in said intermediate pre-blow moulding step comprises the following steps:
- a displacement of said pre-blowing mould (1; 10) onto a supporting frame (2) and up to complete insertion of said preform (Pa) within said pre-blowing mould (1; 10), the subsequent closing of the pre-blowing mould (1; 10) by displacement means, wherein when the lower part (5) of the pre-blowing mould (1; 10) is located at the lowest position, the upper part (6) is detached from the former in an open condition, and wherein when the pre-blowing mould (1; 10) performs the vertical displacement by a vertical displacement actuator (3) upwards and the upper part (6) reaches the limit, the latter stops and a limit switch coupled to the vertical displacement actuator (3) sends the input signal for the closing of the upper part (6);
- when the pre-blowing mould (1; 10) is closed with the preform (Pa) housed therein, an upper seal means lowers onto said pre-blowing mould (1; 10) and the pre-blowing of the preform (Pa) starts;
- when the pre-blowing is completed, air is discharged from the pre-blowing mould (1: 10) and the sealing means raises, wherein at this stage begins the descent of the lower part (5) of the pre-blowing mould (1; 10) but the upper part (6) stays by means of a respective actuator (8) which bias the lower part (5) away from the upper part (6) of the pre-blowing mould (1; 10), and wherein the upper part (6) of the pre-blowing mould (1; 10) is opened slightly before it reaches the maximum allowable distance between said two parts (5, 6) of the pre-blowing mould (1; 10) and before continuing the downward displacement of the pre-blowing mould (1; 10); and
- at the end of said displacement the preform (Pc) results in a completely removed condition from the pre-blowing mould (1; 10) and it is conveyed to the area of the apparatus related to the blowing and final forming step of the large sized container (C).

2. The process for the forming of a large sized container (C) from a preform (Pa) made of an injection moulded material and having big thickness according to the preceding claim, wherein said upper part (6) of the pre-blowing mould (1) comprises two collars (7), and wherein said intermediate pre-blowing step provides that during the displacement of said pre-blowing mould (1) in the direction of removal of said preform Pa from the pre-blowing mould (1) it is carried on both the separation of said two collars (7) from said lower part of said mould, and the subsequent mutual opening of said two collars (7) before they reach the maximum allowable distance from the lower part of said mould and before continuing the displacement of the entire mould downwardly.

3. The process for the forming of a large sized container (C) from a preform (Pa) made of an injection moulded material and having big thickness according to claim 1, wherein said pre-blowing mould (10) comprises a pair of half-moulds or sectors (9, 9) mutually movable in a swinging manner one with respect to the other, and wherein said intermediate pre-blowing step comprises the following steps:
- A displacement of said pre-blowing mould (10) onto a supporting frame (2) and up to the complete insertion of said preform (Pa) into said pre-blowing mould (10);
- Closing of said pre-blowing mould (10) by mutual narrowing of said pair of swinging sectors (9, 9) by displacement means, and wherein said pair of sectors completely enclose said preform;
- Sealing of said pre-blowing mould (10) by sealing means and pre-blowing of said preform (Pa);
- At the end of said pre-blowing air is discharged from the pre-blowing mould (10) and the opening of said sealing means;
- Opening of said pair of swinging sectors (9, 9) by mutual spacing, and subsequent displacement of the pre-blowing mould (10) in the direction of removal of said preform (Pc) from the former; and
- Complete extraction of said preform (Pc) from said pre-blowing mould (10).

4. Apparatus for the forming of a large sized container (C) from a preform (Pa) made of an injection moulded material and having big thickness, comprising first pre-heat treatment means for the pre-heat treatment of said preform, final blow moulding means for the blowing of said pre-treated preform (Pc) to form said large sized container (C), and means for the pre-blowing of said preform (Pa) located after said thermal pre-treatment means and before the final blow moulding means, said pre-blowing means comprising a pre-blowing mould (1; 10) adapted such that said preform (Pa) changes the geometric characteristics and thermal profile before reaching said final blow moulding means for the blowing and moulding of said large sized container (C),
- said pre-blowing mould (1; 10) being slidably mounted longitudinally on a supporting frame (2) integral with said apparatus, and being moved by actuating and handling means (3); and
- said pre-blowing mould (1; 10) having a vertical opening (4) for an axial insertion of the preform from above or below,
**characterized in that**
said pre-blowing mould (1; 10) comprises a lower part (5) and an upper part (6), said upper part (6) comprising two mutual separable collars (7; 70), said collars (7; 70) being mounted in a reciprocally swinging manner one respect to the other, and adapted to be oscillating during the insertion / extraction of said preform.

5. Apparatus for the forming of a large sized container (C) from a preform (Pa) made of an injection moulded material and having big thickness according to claim 4, wherein said lower part (5) of the pre-blowing mould (10) is constituted by two half-moulds (9, 9) mounted in a swinging manner one respect to the other, the pre-blowing mould (10) being suitable to be opened along its longitudinal direction and suitable for the insertion of said preform (Pa) both in the radial and the axial direction of the former.

6. Apparatus for the forming of a large sized container (C) from a preform (Pa) made of an injection moulded material and having big thickness according to any of claims 5, wherein each sector or half-moulds (9, 9) of the pre-blowing mould (10) can be thermally controlled by means of electrical and / or thermal oil and / or the like means.

## Patentansprüche

1. Verfahren zum Formen eines großformatigen Behälters (C) aus einem Vorformling (Pa), bestehend aus einem im Spritzgießverfahren hergestellten Material und aufweisend eine hohe Dicke, wobei das Verfahren einen anfänglichen Vorheizbehandlungsschritt zum Vorheizen des Vorformlings (Pa) aufweist, und einen abschließenden Schritt zum Blasformen des so behandelten Vorformlings (Pa) zum Formen des großformatigen Behälters (C), wobei ein Zwischenschritt zum Vorblasen des Vorformlings (Pa) in einer Vorblasform (1; 10) bereitgestellt ist, wobei der thermisch behandelte Vorformling (Pa) in eine Vorblasform (1; 10) eingefügt wird und ein Vorblasen des Vorformlings (Pa) bis zu einem vorgegebenen Verlängerungsverhältniszustand durchgeführt wird, und wobei der Vorformling (Pc) nach dem Zwischenschritt zum Vorblasen vorgegebene geometrische Eigenschaften und ein thermisches Profil für den nachfolgenden abschließenden Schritt zum Blasformen des großformatigen Behälters (C) besitzt,
**dadurch gekennzeichnet, dass** die Vorblasform (1; 10) einen unteren Teil (5) und einen oberen Teil (6) umfasst, und wobei der Zwischenschritt zum Vorblasformen die folgenden Schritte umfasst:
- Verschieben der Vorblasform (1; 10) auf einem Halterungsrahmen (2) und bis zum kompletten Einfügen des Vorformlings (Pa) in die Vorblasform (1; 10) zu vervollständigen, das anschließende Schließen der Vorblasform (1; 10) durch Verschiebungsmittel, wobei sich dann wenn der untere Teil (5) der Vorblasform (1; 10) an der untersten Position befindet, der obere Teil (6) von der Formungseinheit in einem offenen Zustand gelöst ist, und wobei wenn die Vorblasform (1; 10) die vertikale Verschiebung durch einen Stellantrieb (3) für die vertikale Verschiebung nach oben durchführt und der obere Teil (6) den Grenzanschlag erreicht, wird dieser angehalten und ein Grenzschalter, der mit dem Stellantrieb (3) für die vertikale Verschiebung gekoppelt ist, das Eingabesignal zum Schließen des oberen Teils (6) übermittelt.
- Wenn die Vorblasform (1; 10) mit dem darin befindlichen Vorformling (Pa) geschlossen ist, senken sich oberseitige Siegelmittel auf die Vorblasform (1; 10), und das Vorblasen des Vorformlings (Pa) startet.
- Wenn das Vorblasen abgeschlossen ist, wird die Luft aus der Vorblasform (1; 10) abgeführt, und die Siegelmittel heben sich, wobei in dieser Phase das Herunterfahren des unteren Teils (5) der Vorblasform (1; 10) beginnt, der obere Teil (6) jedoch durch einen jeweiligen Stellantrieb (8) positioniert bleibt, der den unteren Teil (5) wegführend vom oberen Teil (6) der Vorblasform (1; 10) vorspannt, und wobei der obere Teil (6) der Vorblasform (1; 10) leicht geöffnet wird, bevor er den maximal zulässigen Abstand zwischen den zwei Teilen (5, 6) der Vorblasform (1; 10) erreicht und bevor die Abwärtsverschiebung der Vorblasform (1; 10) weitergeführt wird, und
- sich der Vorformling (Pa) am Ende dieser Verschiebung in einem komplett von der Vorblasform (1; 10) entfernten Zustand befindet und zum Bereich der Vorrichtung gefördert wird, der mit dem Blasen und abschließenden Schritt zum Formen des großformatigen Behälters (C) verknüpft ist.

2. Verfahren zum Formen eines großformatigen Behälters (C) aus einem Vorformling (Pa), bestehend aus einem im Spritzgießverfahren hergestellten Material und aufweisend eine hohe Dicke, nach dem vorhergehenden Anspruch, wobei der obere Teil (6) der Vorblasform (1) zwei Manschetten (7) umfasst und wobei der Zwischenschritt zum Vorblasen dafür sorgt, dass während der Verschiebung der Vorblasform (1) in Richtung der Entfernung des Vorformlings (Pa) von der Vorblasform (1) sowohl die Trennung der zwei Manschetten (7) vom unteren Teil der Form als auch das darauffolgende gegenseitige Öffnen der zwei Manschetten (7) durchgeführt werden, bevor diese den maximal zulässigen Abstand zwischen dem unteren Teil der Form erreichen und bevor die Verschiebung der gesamten Form nach unten weitergeführt wird.

3. Verfahren zum Formen eines großformatigen Behälters (C) aus einem Vorformling (Pa), bestehend aus einem im Spritzgießverfahren hergestellten Material und aufweisend eine hohe Dicke, nach Anspruch 1, wobei die Vorblasform (10) ein Paar Halbformen oder Sektoren (9, 9) umfasst, die schwingend gegenseitig zueinander bewegbar sind, und wobei der Zwischenschritt zum Vorblasen die folgenden Schritte umfasst:
- Verschieben der Vorblasform (10) auf einem Halterungsrahmen (2) und bis zum kompletten Einfügen des Vorformlings (Pa) in die Vorblasform (10);
- Verschließen der Vorblasform (10) durch gegenseitiges Verschmälern des Paars schwingender Sektoren (9) durch Verschiebungsmittel, und wobei das Paar von Sektoren den Vorformling komplett umschließt;
- Siegeln der Vorblasform (10) durch Siegelmittel und Vorblasen des Vorformlings (Pa);
- Abführen der Luft aus der Vorblasform (10) am Ende des Vorblasens und Öffnen der Siegelmittel;
- Öffnen des Paars schwingender Sektoren (9, 9) durch gegenseitiges Beabstanden und darauffolgende Verschiebung der Vorblasform (10) in Richtung der Entfernung des Vorformlings (Pc) von der Formungseinheit, und
- komplettes Herausnehmen des Vorformlings (Pc) aus der Vorblasform (10).

4. Vorrichtung zum Formen eines großformatigen Behälters (C) aus einem Vorformling (Pa), bestehend aus einem im Spritzgießverfahren hergestellten Material und aufweisend eine hohe Dicke, umfassend erste Vorheizbehandlungsmittel zur Vorheizbehandlung des Vorformlings, Mittel zum abschließenden Blasformen zum Blasformen des vorbehandelten Vorformlings (Pc), um den großformatigen Behälter (C) zu formen, und Mittel zum Vorblasen des Vorformlings (Pa), die nach den Mitteln zur thermischen Vorbehandlung und vor den Mitteln zum abschließenden Blasformen angeordnet sind, wobei die Mittel zum Vorblasen eine Vorblasform (1; 10) umfassen, die so ausgelegt ist, dass der Vorformling (Pa) seine geometrischen Eigenschaften und sein thermisches Profil ändert, bevor er die Mittel zum abschließenden Blasformen zum Blasen und Formen des großformatigen Behälters (C) erreicht,
- wobei die Vorblasform (1; 10) verschiebbar längsseitig auf einem Halterungsrahmen (2) montiert ist, der fest mit der Vorrichtung verbunden ist, und durch Antriebs- und Handhabungsmittel (3) bewegt wird, und
- wobei die Vorblasform (1; 10) eine vertikale Öffnung (4) für ein axiales Einfügen des Vorformlings von oben oder unten aufweist,
**dadurch gekennzeichnet, dass**
die Vorblasform (1; 10) einen unteren Teil (5) und einen oberen Teil (6) aufweist, wobei der obere Teil (6) zwei gegenseitig trennbare Manschetten (7; 70) umfasst, wobei diese Manschetten (7; 70) gegenseitig zueinander schwingend montiert und ausgelegt sind, um während des Einfügens/Herausnehmens des Vorformlings zu schwingen.

5. Vorrichtung zum Formen eines großformatigen Behälters (C) aus einem Vorformling (Pa), bestehend aus einem im Spritzgießverfahren hergestellten Material und aufweisend eine hohe Dicke, nach Anspruch 4, wobei der untere Teil (5) der Vorblasform (10) aus zwei Halbformen (9, 9) besteht, die schwingend zueinander montiert sind, wobei sich die Vorblasform (10) eignet, um entlang ihrer Längsrichtung geöffnet zu werden, und für das Einfügen des Vorformlings (Pa) sowohl in radialer als auch axialer Richtung zur Formungseinheit geeignet ist.

6. Vorrichtung zum Formen eines großformatigen Behälters (C) aus einem Vorformling (Pa), bestehend aus einem im Spritzgießverfahren hergestellten Material und aufweisend eine hohe Dicke, nach Anspruch 5, wobei jeder Sektor oder jede Halbform (9, 9) der Vorblasform (10) durch elektrisches und/oder thermisches Öl und/oder derartige Mittel thermisch gesteuert werden kann.

## Revendications

1. Procédé de formation d'un contenant de grande dimension (C) à partir d'une préforme (Pa) composée d'une matière moulée par injection et ayant une grande épaisseur, le procédé comprenant une étape initiale de traitement par préchauffage destinée au préchauffage de ladite préforme (Pa), et une étape finale de moulage par soufflage de ladite préforme traitée (Pa) pour la formation dudit contenant de grande dimension (C), et dans lequel il est prévu une étape intermédiaire de pré-soufflage de ladite préforme (Pa) dans un moule de pré-soufflage (1 ; 10), dans lequel ladite préforme traitée thermiquement (Pa) est insérée dans un moule de pré-soufflage (1 ; 10) et un pré-soufflage de ladite préforme (Pa) est réalisé jusqu'à ce que soit atteint une condition de rapport d'allongement prédéterminée, et dans lequel ladite préforme (Pc) après ladite étape intermédiaire de pré-soufflage comporte des caractéristiques géométriques et un profil thermique prédéterminés pour l'étape finale suivante de moulage par soufflage dudit contenant de grande dimension (C),
**caractérisé en ce que** ledit moule de pré-soufflage (1 ;10) comprend une partie inférieure (5) et une partie supérieure (6), et dans lequel ladite étape intermédiaire de moulage par pré-soufflage comprend les étapes suivantes :
- un déplacement dudit moule de pré-soufflage (1 ; 10) sur un châssis de support (2) et jusqu'à une insertion complète de ladite préforme (Pa) à l'intérieur dudit moule de pré-soufflage (1 ; 10), la fermeture subséquente du moule de pré-soufflage (1 ;10) par des moyens de déplacement, dans lequel lorsque la partie inférieure (5) du moule de pré-soufflage (1;10) est située en correspondance de la position la plus basse, la partie supérieure (6) est détachée de la formeuse dans une condition d'ouverture, et dans lequel lorsque le moule de pré-soufflage (1 ;10) effectue le déplacement vertical par un actionneur de déplacement vertical (3) vers le haut et la partie supérieure (6) atteint la fin de course, cette dernière s'arrête et un interrupteur de fin de course couplé à l'actionneur de déplacement vertical (3) envoie le signal d'entrée pour la fermeture de la partie supérieure (6) ;
- lorsque le moule de pré-soufflage (1 ;10) est fermé avec la préforme (Pa) logée en son sein, un moyen de soudage supérieur s'abaisse sur ledit moule de pré-soufflage (1 ;10) et le pré-soufflage de la préforme (Pa) débute ;
- lorsque le pré-soufflage est terminé, de l'air est déchargé du moule de pré-soufflage (1 ;10) et le moyen de soudage se redresse, dans lequel à ce stade démarre la descente de la partie inférieure (5) du moule de pré-soufflage (1 ;10) mais la partie supérieure (6) reste en place au moyen d'un actionneur (8) respectif qui éloigne la partie inférieure (5) de la partie supérieure (6) du moule de pré-soufflage (1 ;10), et dans lequel la partie supérieure (6) du moule de pré-soufflage (1) est légèrement ouverte avant qu'elle n'atteigne la distance maximum admissible entre lesdites deux parties (5, 6) du moule de pré-soufflage (1 ;10) et avant de poursuivre le déplacement vers le bas du moule de pré-soufflage (1 ;10) ; et
- au terme dudit déplacement la préforme (Pa) se retrouve dans une condition totalement retirée du moule de pré-soufflage (1 ;10) et est acheminée vers la zone de l'appareil relative à l'étape finale de formation et de soufflage du contenant de grande dimension (C).

2. Procédé de formation d'un contenant de grande dimension (C) à partir d'une préforme (Pa) composée d'une matière moulée par injection et ayant une grande épaisseur selon la revendication précédente, dans lequel ladite partie supérieure (6) du moule de pré-soufflage (1) comprend deux colliers (7), et dans lequel ladite étape intermédiaire de pré-soufflage prévoit que lors du déplacement dudit moule de pré-soufflage (1) dans la direction de retrait de ladite préforme (Pa) à partir du moule de pré-soufflage (1), aussi bien la séparation desdits deux colliers (7) de ladite partie inférieure dudit moule, que l'ouverture mutuelle subséquente desdits deux colliers (7) sont effectuées avant qu'ils n'atteignent la distance admissible maximum entre la partie inférieure dudit moule et avant la poursuite du déplacement du moule tout entier vers le bas.

3. Procédé de formation d'un contenant de grande dimension (C) à partir d'une préforme (Pa) constituée d'une matière moulée par injection et ayant une grande épaisseur selon la revendication 1, dans lequel ledit moule de pré-soufflage (10) comprend une paire de demi-moules ou secteurs (9, 9) mutuellement mobiles d'une façon oscillante l'un par rapport à l'autre, et dans lequel ladite étape intermédiaire de pré-soufflage comprend les étapes suivantes :
- un déplacement dudit moule de pré-soufflage (10) sur un châssis de support (2) et jusqu'à l'insertion complète de ladite préforme (Pa) dans ledit moule de pré-soufflage (10) ;
- fermeture dudit moule de pré-soufflage (10) par rapprochement mutuel de ladite paire de secteurs oscillants (9) par les moyens de déplacement, et dans lequel ladite paire de secteurs renferme complètement ladite préforme ;
- soudage dudit moule de pré-soufflage (10) par des moyens de soudage et pré-soufflage de ladite préforme (Pa) ;
- au terme dudit pré-soufflage, l'air est déchargé du moule de pré-soufflage (10) et de l'ouverture desdits moyens de soudage ;
- ouverture de ladite paire de secteurs oscillants (9, 9) par espacement mutuel, et déplacement subséquent du moule de pré-soufflage (10) dans la direction de retrait de ladite préforme (Pc) de la formeuse ; et
- extraction complète de ladite préforme (Pc) dudit moule de pré-soufflage (10).

4. Appareil pour la formation d'un contenant de grande dimension (C) à partir d'une préforme (Pa) constituée d'une matière moulée par injection et ayant une grande épaisseur, comprenant un premier moyen de traitement par préchauffage pour le traitement par préchauffage de ladite préforme, un moyen final de pré-soufflage pour le soufflage de ladite préforme prétraitée (Pc) pour former ledit contenant de grande dimension (C), et des moyens pour le pré-soufflage de ladite préforme (Pa) situés après lesdits moyens de pré-traitement thermique et avant le moyen de pré-soufflage final, lesdits moyens de pré-soufflage comprenant un moule de pré-soufflage (1 ; 10) adapté de manière à ce que ladite préforme (Pa) modifie les caractéristiques géométriques et le profil thermique avant d'atteindre ledit moyen de moulage par soufflage final destiné au soufflage et au moulage dudit contenant de grande dimension (C),
- ledit moule de pré-soufflage (1 ; 10) étant monté de façon coulissante et longitudinale sur un châssis de support (2) solidaire dudit appareil, et étant déplacé par des moyens d'actionnement et de manipulation (3) ; et
- ledit moule de pré-soufflage (1 ; 10) comportant une ouverture verticale (4) pour une insertion axiale de la préforme par au-dessus ou par en-dessous,
**caractérisé en ce que**
ledit moule de pré-soufflage (1 ; 10) comprend une partie inférieure (5) et une partie supérieure (6), ladite partie supérieure (6) comprenant deux colliers mutuels séparables (7 ; 70), lesdits colliers (7 ; 70) étant réciproquement montés de façon oscillante l'un par rapport à l'autre et adaptés pour pouvoir osciller lors de l'insertion / l'extraction de ladite préforme.

5. Appareil pour la formation d'un contenant de grande dimension (C) à partir d'une préforme (Pa) constituée d'une matière moulée par injection et ayant une grande épaisseur selon la revendication 4, dans lequel ladite partie inférieure (5) du moule de pré-soufflage (10) est constituée de deux demi-moules (9, 9) montés d'une façon oscillante l'un par rapport à l'autre, le moule de pré-soufflage (10) étant adapté pour être ouvert le long de sa direction longitudinale et adapté pour l'insertion de ladite préforme (Pa) à la fois dans la direction radiale et axiale de la formeuse.

6. Appareil pour la formation d'un contenant de grande dimension (C) à partir d'une préforme (Pa) constituée d'une matière moulée par injection et ayant une grande épaisseur selon l'une quelconque des revendications de 1 à 5, dans lequel chaque secteur ou demi-moule (9, 9) du moule de pré-soufflage (10) peut être commandé thermiquement par l'intermédiaire de moyens électriques et / ou à huile thermique et /ou similaires.
